# EUROPEAN PATENT SPECIFICATION

(11) **EP 0 562 561 B1**
(45) Date of publication and mention of the grant of the patent: **04.06.1997**
(21) Application number: 93104784.9
(22) Date of filing: 23.03.1993
(51) Int. Cl.: F01L 1/26, F01L 13/00

(54) **Valve moving apparatus for internal combustion engine and method therefor**
Ventilantriebsvorrichtung für Brennkraftmaschine und Verfahren
Dispositif de commande de soupapes pour moteur à combustion interne et méthode

(30) Priority: 26.03.1992 JP 68238/92
(43) Date of publication of application: 29.09.1993
(73) Proprietor: MITSUBISHI JIDOSHA KOGYO KABUSHIKI KAISHA, Tokyo 108 (JP)
(72) Inventor: Miyamoto, Katsuhiko, Nishikyo-ku, Kyoto-shi, Kyoto (JP)
(74) Representative: Strehl Schübel-Hopf Groening & Partner

(56) References cited:
- DE-A- 4 122 827
- US-A- 4 535 732
- PATENT ABSTRACTS OF JAPAN vol. 9, no. 172 (M-397) 17 July 1985 & JP-A-60 043 130 (FUJITSU TEN KK) 7 March 1985

## Description

The present invention relates to a valve-moving control apparatus and method for operating a number of valves of cylinders in an internal combustion engine in accordance with the driving conditions of the vehicle including the load on the vehicle.

In an internal combustion engine with intermittent actuation of some of the valves, when the opening degree of the throttle is low at a given engine speed, a large torque can be produced by actuating only part of the valves, whereas when the throttle opening degree is high at the same rotational speed, production of large torque requires actuating all valves.

An apparatus with the features included in the first part of claim 1 and a method with the steps set forth in the first part of claim 13 are known from DE-A-4 122 827.

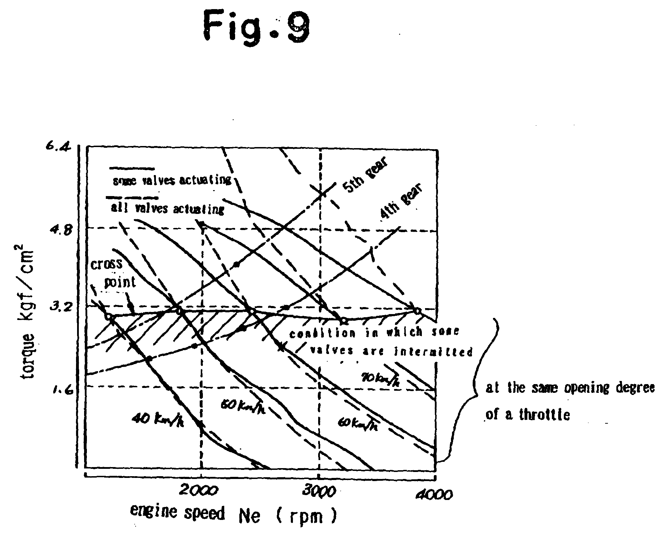

In an internal combustion engine thus equipped, the switch for intermittently actuating some valves or all valves is usually operated at a timing (crossing point) when the torque output of the engine with some valves intermitted (intermittently actuated) and the torque output of the engine with all valves actuated are equal at the same opening degree of the throttle, as shown in Figure 9. In that figure, each continuous line shows the torque output of the engine in which some valves are intermitted and the other valves are actuated at a certain throttle opening degree according to the rotational speed of the engine and each broken line shows a torque output of the engine in which all valves are actuated at the opening degree of the throttle according to rotational speed of the engine. White small circles shows cross points of the continuous lines and the broken lines at the respective opening degree of the throttle, respectively. Under the cross point, some valves of the engine are intermitted since the torque output of the engine in which the same of the valves are intermitted is larger than the torque output of the engine in which all valves are actuated.

However, if an internal combustion engine in which some valves of cylinders are intermitted is changed to actuate all valves, the inner pressure of an intake pipe of all cylinder is very high immediately after the operation is changed, and a large volume of air is suddenly intaken into all cylinders so that a large torque occurs and its shock is transmitted to the mounting of the engine, a driving mechanism and wheels.

The shock caused by such a change of torque less when a gear is shifted to high speed traveling such as the third , the fourth or the fifth gear of which a gear change ratio is relatively low. On the other hand, the shock has a strong effect to a chassis when the gear is shifted to low speed traveling such as the first or the second gear of which the gear change ratio is large.

It is object of the present invention overcome the above mentioned drawbacks.

This object is met by the invention as set out in claims 1 and 13.

### Brief Description of the Drawings

Fig. 1 shows a flow chart of one embodiment according to the present invention.

Fig. 2 shows a block diagram of a system of an internal combustion engine with a valve-moving mechanism.

Fig. 3 is a graph for a border line between a first range of a cylinder closing or a second range of the cylinder opening while a gearbox is shifted to the gears except the first forward gear and the second forward gear.

Fig. 4 is a graph showing a border line between a first range of a cylinder closing and a second range of the cylinder opening while the gearbox is shifted to the first forward gear or the second forward gear.

Fig. 5 is a perspective view of an essential part of a valve mechanism.

Fig. 6 is a cross sectional view of a part of Fig. 5.

Fig. 7 is a cross sectional view of Fig. 5 along a longitudinal line of a rocker shaft.

Fig. 8 is a block diagram for determining a hydraulic pressure.

Fig. 9 is a graph for showing cossing point of first and second condition described later.

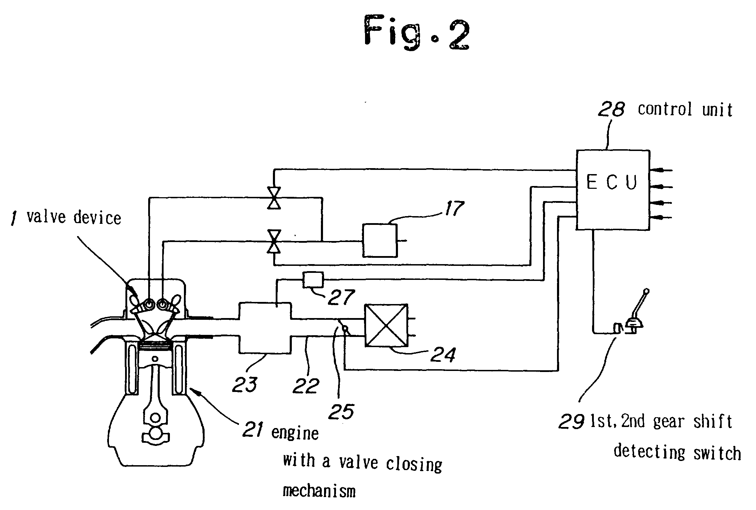

One embodiment of the present invention will be described with reference to drawings. Fig. 2 shows a fundamental system of an internal combustion engine with a valve closing mechanism. 21 refers an engine with a valve closing mechanism. A valve device 1 for closing a valve of a cylinder at low speed is provided as an intake valve. The valve device 1 is capable of determining a timing for closing the valve of the cylinder at low and high speed.

22 refers an intake pipe, 23 refers a surge tank, 24 refers an air cleaner provided at an inlet of an intake pipe 23, and 25 refers a throttle valve. An opening degree of the throttle valve 25 is detected by a throttle position sensor and a signal is input to an electronical control unit (ECU) 28. A boost sensor 27 for detecting a boost is provided at the surge tank 23 and its data is input to the electronical control unit 28. 29 refers to a switch for detecting the first forward gear shift and second forward gear shift provided at a transmission side. If a gear is shifted to the first gear or the second gear, the switch 29 inputs ON signal to the electrical control unit 28.

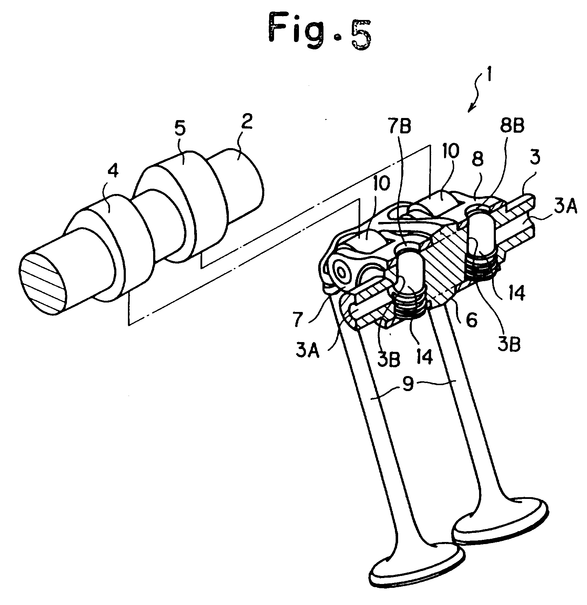

A valve device 1 of the embodiment according to the present invention is shown in Fig. 5 through Fig. 8. The valve device 1 provides a cam shaft 2 and a rocker shaft part 3. The cam shaft 2 provides a low speed cam 4 with a small lifting amount and a high speed cam 5 with a large lifting amount.

A T-shaped lever 30 is integrally formed with the rocker shaft part 3 and an arm portion 6 having a T-shape is mounted on a middle portion of the rocker shaft 3 with its base end. Sub rocker arms 7 and 8 are provided at the both sides of the rocker shaft part 3.

A sliding end of the arm portion 6 contacts with a valve stem end of an intake valve 9.

On the other hand, each base end of the sub rocker arms 7 and 8 are pivotably rotated by the rocker shaft part 3. Roller bearings 10 is provided at sliding ends of the sub rocker arms 7 and 8, respectively.

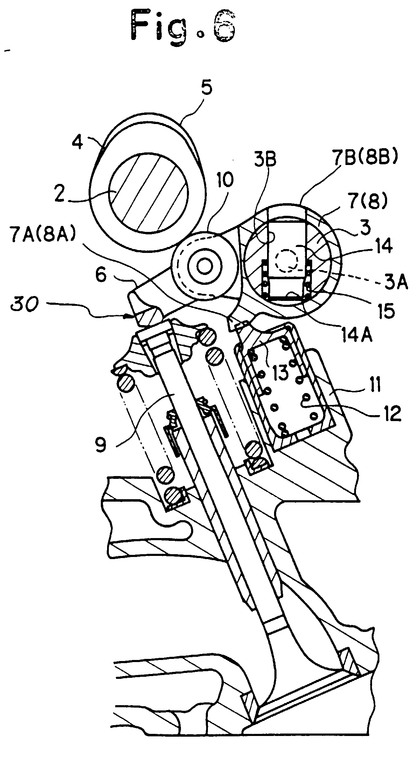

Fig. 6 shows a cross sectional view of a low speed cam 4. In Fig. 6, the sliding ends of the sub rocker arms 7 and 8 provide protrusions 7A and 8A except supporting portions for the roller bearings 10, respectively. The protrusion 7A contacts with a plunger 13 positioned at a top end of an arm spring 12 in a cylinder head 11. In Fig. 6, the protrusion 7A can rotate clockwisely in order to press the roller bearing 19 against the cam 4.

On the other hand, engaging hole 7B (8B) penetrating the sub rocker arm 7 (8) from a central point thereof in a radial direction is provided at the sub rocker arm 7 (8), respectively. The engaging holes 7B and 8B provide passages for respective connecting plunger as described below.

A hydraulic path 3A is provided at an axial central portion along a longitudinal direction of an axis in an inside of the rocker shaft part 3. A penetrated hole 3B is provided perpendicular to the hydraulic path 3A at a position confronting with the engaging hole 7B (8B). A center of the engaging hole 7B (8B) coincides with the center of the penetrated hole 3B when a base circle of the cam 4 (5) confronts with the roller bearing 10.

In each penetrated hole 3B, a connecting plunger 14 for sliding between the penetrated hole 3B and the engaging hole 7B (8B) is provided. A head portion of the connecting plunger 14 is located at a side of the engaging hole 7B (8B) formed in the sub rocker arm 7 (8). Usually, the head portion is biased by a pressure spring 15 provided between a flange portion 14A formed at an opposite end of the head portion and the supporting portion of the rocker shaft 8 in order to bias the head portion away from the engaging hole 7B (8B).

On the other hand, an out let path 31 of a hydraulic setting device 16 is connected to the hydraulic path 3A in the rocker shaft part 3. The hydraulic setting device 16 controls an inner pressure of hydraulic path 3A according to driving conditions. The hydraulic setting device 16 has electro-magnetic switch valves 16A and 16B controlled by the electric control unit 28.

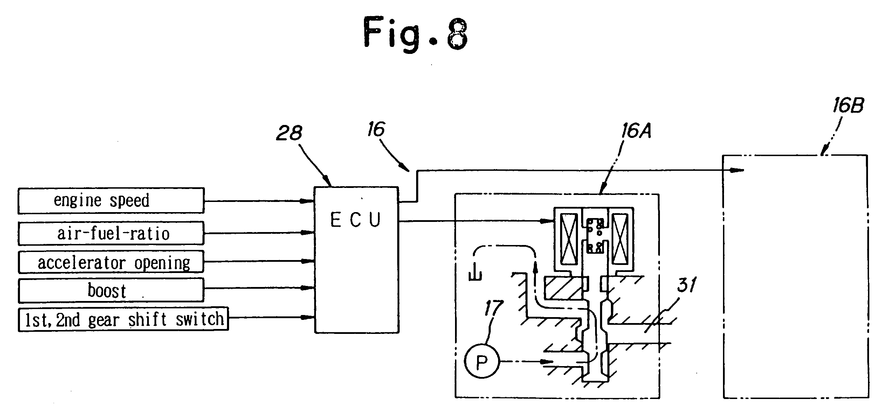

The electro-magnetic switch valves 16A and 16B are provided at a line for low speed traveling and a line for high speed traveling, respectively. Each switch valves 16A and 16B have three positions. At the first position, the switch valve 16A and 16B is connected to a path from a hydraulic pump 17. At the second position, the switch valve 16A and 16B is connected to a return path under an atmosphere releasing pressure. At the third position, the switch valve 16A and 16B is connected to the hydraulic path 3A in the rocker shaft part 3. When the switch valves 16A and 16B are not energized, they are positioned at the second position to return hydraulic oil from the hydraulic pump 17 to the return path. In Fig. 8, although the electro-magnetic switch valve 16B provided at a line for high speed is not shown, the structure and operation thereof is the same as that of the electro-magnetic switch valve 16A.

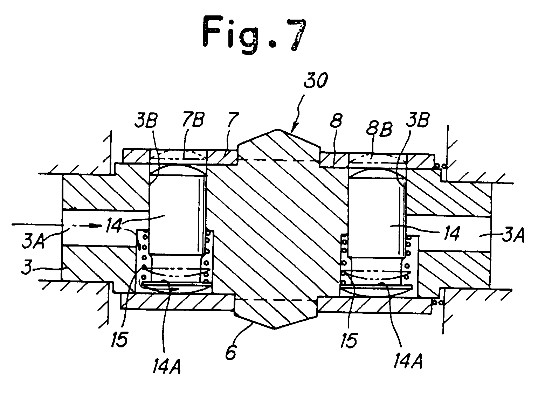

Accordingly, the pressure in the hydraulic path 3A is maintained at a low level so that the connecting plunger 14 can be released from the engaging hole 7B (8B) by the pressure spring 15 as shown in Fig. 7.

On the other hand, various data from an engine rotational sensor, an oxygen sensor for detecting idle fuel consumption and a throttle position sensor for detecting an open degree of an accelerator and the other sensors are inputs to the electronical control unit 28. The electronical control unit 28 judges whether a vehicle drives under a low speed condition or a high speed condition and how much load is applied to the vehicle corresponding to the input data from the sensors so that the electronical control unit 28 can output a driving signal to the electro-magnetic switch valves 16A and 16B.

Accordingly, when the electro-magnetic switch valve 16A (16B) is energized, hydraulic oil is supplied from the hydraulic pump 17 to the hydraulic path 3A in order to increase the inner pressure in the path 3A.

In the above system, when the electronical control unit 28 determines that a vehicle drives at relatively low speed, which is judged from input data about the engine rotational speed, air fuel ratio and the opening degree of an accelerator the electric-magnetic switch valve 16A, provided at a low speed traveling line, is energized to be set to the first position and the electro-magnetic switch valve 16B, provided at a high speed traveling line is set in a normal position, i.e. the second position.

Hydraulic oil from the hydraulic pump 17 is switched to supply to the hydraulic path 3A by energizing the electro-magnetic switch valve 16A provided at the low speed traveling line. The electro-magnetic switch valve 16B positioned at the high speed traveling line is maintained at the initial position by not energizing the electro-magnetic valve 16B so that the supply of hydraulic oil to the hydraulic path 3A can be suppressed for the high speed traveling line.

Accordingly, as shown broken line in Fig. 7, the rocker shaft part 3 and the first sub rocker arm 7 are integrally moved by protruding the connecting plunger 14 toward the engaging hole 7B of the sub rocker arm 7 against the spring force of the pressure spring 15 so that the connecting plunger 14 provided at the low speed traveling line is controlled to close the electro-magnetic switch valve 16A for the low speed cam 4. As shown by continuous line in Fig. 7, the connecting plunger 14 at the high speed line is maintained at a position in the penetrated hole 3B of the rocker shaft part 3 and the driving force is not transmitted between the second sub rocker arm 8 and the rocker shaft part 3 so that the opening/closing of the corresponding valve can not be controlled by the high speed cam 5.

On the other hand, when the rotational speed of the engine approaches high speed range, the electro-magnetic switch valve 16B provided at the high speed line is conversely energized with respect to the energization of the electro-magnetic switch valve 16A provided for low speed. Accordingly, in this a case, as shown by the the broken lines in Fig. 7, the connecting plunger 14 provided at the high speed traveling line is protruded toward the engaging hole 8B of the second sub rocker arm 8 so that the rocker shaft part 3 and the second sub rocker arm 8 are integrally moving. Driving force is transmitted between the second sub rocker arm 8 provided at the high speed line and the rocker shaft part 3. On the other hand, the connecting plunger 14 provided at the low speed traveling line is released from the engaging hole 7B and is positioned in a retracted position in the penetrated hole 3B.

As a result, a valve opening/closing control of the valve is accomplished by the high speed cam 5.

During high speed traveling, for example, if a throttle position sensor defects that the vehicle is driven under low load condition such as an idling condition, a valve opening/closing control for one or more selected cylinder is not operated at all. That is, under the condition, in the electronical control unit 28, energization of the electro-magnetic switch valves 16A and 16B positioned at the low speed traveling line and the high speed traveling line are released.

Accordingly, pressurized hydraulic oil is not supplied by any electro-magnetic switch valves 16A, 16B positioned at the low speed traveling line and the high speed traveling line so that the pressure in the oil path 3A of the rocker shaft part 3 is not increased. Thereby, the connecting plungers 14 are positioned in the normal retracted position which is inside of the penetrated hole 3B by the pressure spring 15. Driving force is maintained to be released between the first and second sub rocker arms 7 and 8 and a rocker shaft part 3.

Thus, the sub rocker arms 7 and 8 are maintained in a valve intermitting condition so that the valves are not closed and opened by the low speed and high speed cams 4 and 5. Thus, the valve is maintained its closed position. Under this condition, the position of the connecting plunger 14 is shifted corresponding to the rotational speed of the engine after the low load condition is released.

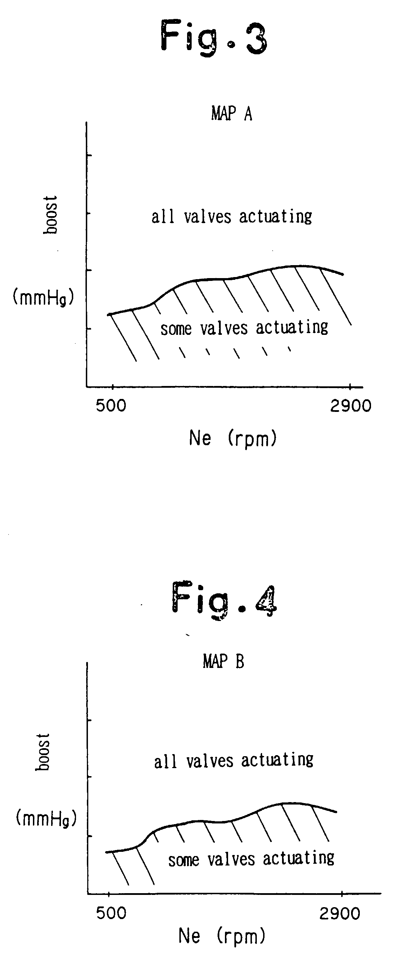

If a gear is shifted to the first forward gear or second forward gear in the gearbox, a switching from a first condition, in which some valves are closed, to a second condition, in which the all valves are operated, is operated in a low load condition in order to decrease a shock caused by shifting as much as possible. Fig. 3 shows a switch judging map A in which a gear is shifted to a gear except the first forward gear and the second forward gear, that is, the gear shift detecting switch outputs an OFF signal. A border line in Fig. 3 corresponds white small circles as cross points as shown in Fig. 9. The lower side shows the first condition in which some valves are intermitted and the other valves are actuated and the upper side shows the second condition in which all valves are actuated. On the other hand, a further map B as shown in Fig.4 is provided in which a gear is shifted to a relatively high gear. The border line in Fig. 4 corresponds to white small circles as cross point as shown in Fig. 9. The lower side shows the first condition and the upper side shows the second condition. In the maps A and B, the lateral axis is a boost in a surge tank 23. Upon comparing Fig. 3 and Fig. 4, the load amount on the border line in Fig. 4 is lower than the load amount on the border line in FIg. 3. The load appears as a boost in the surge tank 23 detected by the boost sensor 27. In the maps A and B, the lateral axis refers to the rotational speed and the vertical axis is the boost.

Fig. 9 shows crossing points of the first and second conditions. In Fig. 9, continuous lines show the first conditions depending on different speeds of vehicle at the same opening degrees of a throttle and broken line show the second conditions depending on corresponding different speeds of vehicle at the same opening degrees of the throttle. A right increasing continuous line shows a gearbox with five forward gears and a right increasing alternate broken line shows a gearbox with four forward gears.

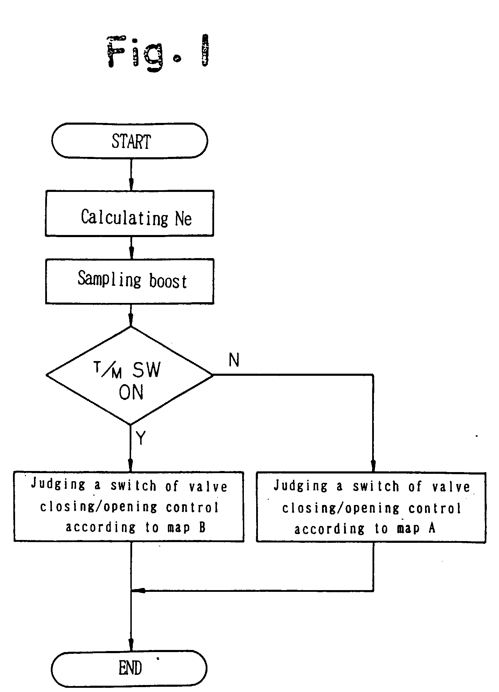

Fig. 1 shows a flow chart for switching between the first condition and the second condition. Under the control, a rotational speed of an engine and boost are detected at first and then it is judged whether the switch 29 for detecting the first and second gear is ON or not. If it is detected as OFF, it means that the gear is not shifted to the first nor the second gear so that the shift between the first condition and the second condition is operated based on the map A.

If it is judged that the switch 29 for detecting the first forward gear and the second forward gear is ON, the switch between the first condition and the second condition is operated based on the map B of which a cross point is lower than the corresponding cross point in the map A. Therefore, the shock caused by shifting can be reduced.

In this embodiment, a load condition is judged as boost, the other parameters, for example, an intake air volume with respect to rotational speed of an engine may be used. It will be obvious that the valve device of the present invention thus described, the same may be varied in many ways. Such variations are not to be regarded as a departure from the spirit and scope of the invention, and all such modifications as would be obvious to one skilled in the art are intended to be included within the scope of the following claims.

According to a control method for shifting the first condition in which some valves are closed and the second condition in which the all valves are actuated in an internal combustion engine with a valve-moving mechanism according to the present invention, if a gearbox is shifted to a relatively low gear shift, the shift is operated at a relatively low load condition so that a over load caused by a torque can be prevented and a shock caused by switching can be reduced as much as possible.

## Claims

1. An apparatus for controlling the operation of the intake/ exhaust valves in an internal combustion engine, comprising
detector means for detecting the driving condition of the vehicle including the load applied to the engine,
switch control means (28) for outputting a switch signal in accordance with the driving condition detected by said detector means, and
control means (16A, 16B) for switching at least one of the intake/exhaust valves (9) in response to said switch signal thereby changing the number of valves (9) being actuated,
**characterised** in
that said detector means includes gear shift detecting means (29) for detecting a gear shift to a lower one of the gears available in the vehicle, and
that said switch control means (28) outputs said switch signal at an engine load which is lower for a gear shift to one of said lower gears than for other gear shifts.

2. The apparatus of claim 1, wherein said detector means includes a pressure sensor (27) provided at an intake pipe (22) of the engine.

3. The apparatus of claim 1, wherein said detector means includes a sensor for detecting the engine speed.

4. The apparatus of claim 1, wherein said detector means includes a sensor for detecting the opening degree of a throttle valve (25).

5. The apparatus of claim 1, wherein detector means includes a sensor for detecting the air flow volume in the intake pipe (22) of the engine.

6. The apparatus of any preceding claim, wherein said lower gears are the first and second forward gears.

7. The apparatus of any preceding claim, wherein said switch control means (28) has a plurality of maps (A, B) determined by said engine load and speed.

8. The apparatus of claim 7, wherein one (B) of said maps is used when a gear shift to one of said lower gears is made, and the other map (A) is used for the other gear shifts.

9. The apparatus of claim 7, wherein said maps (A, B) are set up so that said switch signal is output at a relatively high engine load while the engine speed increases.

10. The apparatus of any preceding claim, wherein said control means (16A, 16B) comprises
a cam shaft (2) mounting a low speed cam (4) and a high speed cam (5),
a lever arrangement provided adjacent said cam shaft (2) and having a rocker shaft (3) with an integral arm (6) contacting a respective one of said intake/exhaust valves (9),
a low speed rocker arm (7) and a high speed rocker arm (8) pivotably mounted on said rocker shaft (3) and moved by said low speed cam (4) and high speed cam (5), respectively,
spring means (11∼13) for pressing said rocker arms (7, 8) in contact with said cams (4, 5), and
a hydraulic oil actuated switch mechanism for selectively engaging said rocker arms (7, 8) with said rocker shaft (3) in response to said switch signal.

11. The apparatus of claim 10, wherein said rocker arms (7, 8) are pivotably mounted on said rocker shaft (3) on either side of said integral arm (6).

12. The apparatus of claim 10 or 11, wherein said rocker arms (7, 8) contact said cams (4, 5) via roller bearings (10).

13. A method for controlling the operation of the intake/ exhaust valves in an internal combustion engine, comprising
detecting the driving condition of the vehicle including the load applied to the engine,
generating a switch signal in accordance with the detected driving condition and
switching at least one of the intake/exhaust valves in response to said switch signal thereby changing the number of valves (9) being actuated,
**characterised** in
that said switch signal is generated at an engine load which is lower when a gear shift is detected to a lower one of the gears available in the vehicle than when no gear shift to one of said lower gears is detected.

14. The method of claim 13, wherein the engine load is detected by means of a pressure sensor (27) provided at an intake pipe (22) of the engine.

15. The method of claim 13, wherein the detection of the driving condition includes detecting the engine speed.

16. The method of claim 13, wherein the detection of the driving condition includes detecting the opening degree of the throttle valve (25).

17. The method of claim 13, wherein the detection of the driving condition includes detecting the air flow volume in the intake pipe (22) of the engine.

18. The method of any of claims 13 to 17, wherein said lower gears are the first and second forward gears.

19. The method of any of claims 13 to 18, wherein said switch signal is generated in accordance with a plurality of maps (A, B), which are determined by detecting the engine load and speed.

## Patentansprüche

1. Vorrichtung zur Betriebssteuerung der Einlaß/Auslaß-Ventile in einer Brennkraftmaschine, umfassend:
eine Detektoreinrichtung zum Erfassen des Fahrzustandes des Fahrzeugs einschließlich der an dem Motor angreifenden Last,
eine Schaltsteuereinrichtung (28) zur Ausgabe eines Schaltsignals entsprechend dem von der Detektoreinrichtung erfaßten Fahrzustand, und
eine Steuereinrichtung (16A, 16B) zum Umschalten mindestens eines der Einlaß/Auslaßventile (9) entsprechend dem Schaltsignal zur Änderung der Anzahl von betätigten Ventilen (9),
dadurch **gekennzeichnet,**
daß die Detektoreinrichtung eine Gang-Detektoreinrichtung (29) zum Erfassen einer Gangumschaltung auf einen niedrigeren der in dem Fahrzeug vorhandenen Gänge, und
daß die Schaltsteuereinrichtung (28) das Schaltsignal bei einer Motorlast ausgibt, die für eine Gangumschaltung auf einen der niedrigeren Gänge geringer ist als bei anderen Gangumschaltungen.

2. Vorrichtung nach Anspruch 1, wobei die Detektoreinrichtung einen an einem Einlaßstutzen (22) des Motors vorgesehenen Drucksensor (27) aufweist.

3. Vorrichtung nach Anspruch 1, wobei die Detektoreinrichtung einen Sensor zur Erfassung der Motordrehzahl aufweist.

4. Vorrichtung nach Anspruch 1, wobei die Detektoreinrichtung einen Sensor zur Erfassung des Öffnungswinkels einer Drosselklappe (25) aufweist.

5. Vorrichtung nach Anspruch 1, wobei die Detektoreinrichtung einen Sensor zur Erfassung des Luftströmungsvolumens im Ansaugstutzen (22) des Motors aufweist.

6. Vorrichtung nach einem der vorhergehenden Ansprüche, wobei die niedrigeren Gänge der erste und der zweite Vorwärtsgang sind.

7. Vorrichtung nach einem der vorhergehenden Ansprüche, wobei die Schaltsteuereinrichtung (28) mehrere durch Motorlast und -drehzahl bestimmte Diagramme (A, B) aufweist.

8. Vorrichtung nach Anspruch 7, wobei eines (B) der Diagramme für eine Gangumschaltung auf einen der niedrigeren Gänge und das andere Diagramm (A) für die anderen Gangumschaltungen benutzt wird.

9. Vorrichtung nach Anspruch 7, wobei die Diagramme (A, B) so eingerichtet sind, daß das Schaltsignal bei verhältnismäßig hoher Motorlast ausgegeben wird, während die Motordrehzahl steigt.

10. Vorrichtung nach einem der vorhergehenden Ansprüche, wobei die Steuereinrichtung (16A, 16B) aufweist:
eine Nockenwelle (2), auf der ein Niedergeschwindigkeits- und ein Hochgeschwindigkeits-Nocken (4, 5) montiert sind,
eine neben der Nockenwelle (2) vorgesehene Hebelanordnung mit einem Schwenkhebel (3), der einen jeweils eines der Einlaß/Auslaß-Ventile (9) berührenden angeformten Arm (6) aufweist,
einen Niedergeschwindigkeits- und einen Hochgeschwindigkeits-Schwenkarm (7, 8), die auf der Schwenkwelle (3) drehbar gelagert und von dem Niedergeschwindigkeits- bzw. dem Hochgeschwindigkeits-Nocken (4, 5) bewegt werden,
eine die Schwenkarme (7, 8) in Berührung mit den Nocken (4, 5) drückende Federeinrichtung (11∼13), und
einen durch Hydrauliköl betätigten Schaltmechanismus, der die Schwenkarme (7, 8) entsprechend dem Schaltsignal selektiv mit der Schwenkwelle (3) in Eingriff bringt.

11. Vorrichtung nach Anspruch 10, wobei die Schwenkarme (7, 8) zu beiden Seiten des angeformten Arms (6) auf der Schwenkwelle (3) drehbar gelagert sind.

12. Vorrichtung nach Anspruch 10 oder 11, wobei die Schwenkarme 7, 8) die Nocken (4, 5) über Wälzlager (10) berühren.

13. Verfahren zur Betriebssteuerung der Einlaß/Auslaßventile in einer Brennkraftmaschine, wobei
der Fahrzustand des Fahrzeugs einschließlich der an dem Motor angreifenden Last erfaßt,
entsprechend dem erfaßten Fahrzustand ein Schaltsignal erzeugt und
entsprechend dem Schaltsignal mindestens eines der Einlaß/Auslaßventile umgeschaltet und dadurch die Anzahl der betätigten Ventile (9) verändert wird,
dadurch **gekennzeichnet,** daß das Schaltsignal bei einer Motorlast erzeugt wird, die bei einer Gangumschaltung auf einen niedrigeren der in dem Fahrzeug vorhandenen Gänge geringer ist als dann, wenn keine Gangumschaltung auf einen der niedrigeren Gänge erfaßt wird.

14. Verfahren nach Anspruch 13, wobei die Motorlast mittels eines an einem Ansaugstutzen (22) des Motors vorhandenen Drucksensors (27) erfaßt wird.

15. Verfahren nach Anspruch 13, wobei zur Erfassung des Fahrzustandes die Erfassung der Motordrehzahl gehört.

16. Verfahren nach Anspruch 13, wobei zur Erfassung des Fahrzustandes die Erfassung des Öffnungswinkels der Drosselklappe (25) gehört.

17. Verfahren nach Anspruch 13, wobei zur Erfassung des Fahrzustandes die Erfassung des Luftströmungsvolumens im Einlaßstutzen (22) des Motors gehört.

18. Verfahren nach einem der Ansprüche 13 bis 17, wobei die niedrigeren Gänge der erste und der zweite Vorwärtsgang sind.

19. Verfahren nach einem der Ansprüche 13 bis 18, wobei das Schaltsignal entsprechend mehreren durch Erfassen von Motorlast und -drehzahl bestimmten Diagrammen (A, b) erzeugt wird.

## Revendications

1. Dispositif pour commander le fonctionnement des soupapes d'admission/ échappement dans un moteur à combustion interne, comprenant
un moyen de détection pour détecter le régime d'entraînement du véhicule, dont la charge appliquée au moteur,
un moyen de commande de commutation (28) pour produire un signal de commutation en fonction du régime d'entraînement détecté par ledit moyen de détection, et
un moyen de commande (16A, 16B) pour commuter au moins une des soupapes d'admission/échappement (9) en réponse audit signal de commutation en modifiant de ce fait le nombre de soupapes (9) actionnées,
**caractérisé**
en ce que ledit moyen de détection comporte un moyen (29) de détection de changement de vitesse pour détecter un changement de vitesse consistant en une rétrogradation vers une des vitesses inférieures disponibles dans le véhicule, et
en ce que ledit moyen de commande de commutation (28) produit ledit signal de commutation lorsque la charge du moteur pour une rétrogradation vers une desdites vitesses inférieures est plus faible que pour d'autres changements de vitesse.

2. Dispositif selon la revendication 1, dans lequel ledit moyen de détection comporte un détecteur (27) de pression disposé au niveau d'un tuyau d'admission (22) du moteur.

3. Dispositif selon la revendication 1, dans lequel ledit moyen de détection comporte un détecteur pour détecter la vitesse du moteur.

4. Dispositif selon la revendication 1, dans lequel ledit moyen de détection comporte un détecteur pour détecter le degré d'ouverture d'un papillon des gaz (25).

5. Dispositif selon la revendication 1, dans lequel le moyen de détection comporte un détecteur pour détecter le volume du flux d'air dans le tuyau d'admission (22) du moteur.

6. Dispositif selon l'une quelconque des revendications précédentes, dans lequel lesdites vitesses inférieures sont les première et deuxième vitesses en marche avant.

7. Dispositif selon l'une quelconque des revendications précédentes, dans lequel ledit moyen de commande de commutation (28) comporte une pluralité de cartes (A, B) déterminées par la charge et la vitesse du moteur.

8. Dispositif selon la revendication 7, dans lequel une (B) desdites cartes est utilisée lorsqu'une rétrogradation vers une desdites vitesses inférieures est effectuée, et l'autre carte (A) est utilisée pour les autres changements de vitesse.

9. Dispositif selon la revendication 7, dans lequel lesdites cartes (A, B) sont établies de façon que ledit signal de commutation soit produit dans des conditions de charge de moteur relativement forte pendant l'augmentation de la vitesse du moteur.

10. Dispositif selon l'une quelconque des revendications précédentes, dans lequel ledit moyen de commande (16A, 16B) comporte
un arbre (2) à cames supportant une came (4) de petite vitesse et une came (5) de grande vitesse,
un système de levier disposé au voisinage immédiat dudit arbre (2) à cames et ayant un axe (3) de culbuteur avec un bras solidaire (6) au contact d'une soupape respective parmi lesdits soupapes d'admission/échappement (9),
un culbuteur (7) de petite vitesse et un culbuteur (8) de grande vitesse articulés sur ledit axe (3) de culbuteur et respectivement actionnés par ladite came (4) de petite vitesse et ladite came (5) de grande vitesse,
des moyens formant ressorts (11-13) pour pousser lesdits culbuteurs (7, 8) au contact desdites cames (4, 5), et
un mécanisme de commutation fonctionnant à l'huile hydraulique pour faire coopérer de manière sélective lesdites culbuteurs (7, 8) avec ledit axe (3) de culbuteur en réponse audit signal de commutation.

11. Dispositif selon la revendication 10, dans lequel lesdits culbuteurs (7, 8) sont articulés sur ledit axe (3) de culbuteur de part et autre dudit bras solidaire (6).

12. Dispositif selon la revendication 10 ou 11, dans lequel lesdits culbuteurs (7, 8) viennent au contact desdites cames (4, 5) par l'intermédiaire de roulements (10) à rouleaux.

13. Procédé pour commander le fonctionnement des soupapes d'admission/ échappement dans un moteur à combustion interne, comprenant les étapes consistant à
détecter le régime d'entraînement du véhicule, dont la charge appliquée au moteur,
produire un signal de commutation en fonction du régime d'entraînement détecté, et
commuter au moins une des soupapes d'admission/échappement en réponse audit signal de commutation, en modifiant de ce fait le nombre de soupapes (9) actionnées ;
**caractérisé** en ce que
ledit signal de commutation est produit, lorsqu'une rétrogradation vers une vitesse inférieure parmi les vitesses disponibles dans les véhicules est détectée, au moment où la charge du moteur est inférieure à celle existant lorsqu'aucune rétrogradation vers une desdites vitesses inférieures n'est détectée.

14. Procédé selon la revendication 13, dans lequel la charge du moteur est détectée à l'aide d'un détecteur (27) de pression disposé au niveau d'un tuyau d'admission (22) du moteur.

15. Procédé selon la revendication 13, dans lequel la détection du régime d'entraînement comporte la détection de la vitesse du moteur.

16. Procédé selon la revendication 13, dans lequel la détection du régime d'entraînement comporte la détection du degré d'ouverture du papillon des gaz (25).

17. Procédé selon la revendication 13, dans lequel la détection du régime d'entraînement comporte la détection du volume du flux d'air dans le tuyau d'admission (22) du moteur.

18. Procédé selon l'une quelconque des revendications 13 à 17, dans lequel lesdites vitesses inférieures sont les première et seconde vitesses en marche avant.

19. Procédé selon l'une quelconque des revendications 13 à 18, dans lequel ledit signal de commutation est produit en fonction d'une pluralité de cartes (A, B), qui sont déterminées en détectant la charge et la vitesse du moteur.
